# EUROPEAN PATENT APPLICATION

(11) **EP 4 651 473 A1**
(43) Date of publication of application: **19.11.2025**
(21) Application number: 24759651.3
(22) Date of filing: 20.02.2024
(51) Int. Cl.: H04L 69/22, H04L 69/16, H04L 69/163

(54) **DATA TRANSMISSION METHOD AND RELATED APPARATUS**

(30) Priority: 22.02.2023 CN 202310173129
(71) Applicant: Huawei Technologies Co., Ltd., Shenzhen, Guangdong 518129 (CN)
(72) Inventor: LI, Youyong, Shenzhen, Guangdong 518129 (CN)
(74) Representative: Pfenning, Meinig & Partner mbB
(86) International application number: PCT/CN2024/077683
(87) International publication number: WO 2024/174974

(57) **Abstract**

A data transmission method is applied to a communication apparatus that needs to transmit data. In the method, a transmit end adds a flag to a packet header of a last packet in at least one packet that carries complete data, to indicate that the packet is the last packet in all packets corresponding to the complete data, so that a receive end can determine a message boundary based on the flag in the packet header. The receive end only needs to check a specific position in a packet header of each received packet to determine whether the packet carries a flag. In other words, a message boundary can be determined without traversing data carried in the packet. Therefore, less processing resources of the receive end are consumed, thereby effectively improving data processing efficiency.

## Description

This application claims priority to Chinese Patent Application No. 202310173129.1, filed with the China National Intellectual Property Administration on February 22, 2023 and entitled "DATA TRANSMISSION METHOD AND RELATED APPARATUS", which is incorporated herein by reference in its entirety.

### TECHNICAL FIELD

This application relates to the field of communication technologies, and in particular, to a data transmission method and a related apparatus.

### BACKGROUND

In the network communication field, two communication apparatuses that communicate with each other usually need to construct packets according to a predefined transmission protocol and implement data communication by exchanging the packets.

Currently, a widely applied transmission protocol is the transmission control protocol (Transmission Control Protocol, TCP). TCP is a stream transmission protocol. When sending data, a transmit end does not need to have all the data of a complete message ready before sending. Instead, the transmit end can send a part of the data as it becomes available. A receive end needs to determine a message boundary in a receiving process, and parses the complete message only after receiving the complete message.

Therefore, to facilitate determining of the message boundary by the receive end, there is an application layer above TCP. The application layer may distinguish the message boundary by defining a special character. In this case, the receive end may search received data for a boundary character, to determine whether the message boundary is reached. If the message boundary is not reached, the receive end continues to read data from a TCP data stream. If the message boundary is reached, the receive end parses the message.

Because the data needs to be traversed for searching the data for a specific character, currently, a manner of searching for the specific character to distinguish the message boundary consumes a lot of processing resources of the receive end.

### SUMMARY

This application provides a data transmission method, so that a message boundary can be determined by using less processing resources, thereby effectively improving data processing efficiency.

A first aspect of this application provides a data transmission method, applied to a first communication apparatus serving as a transmit end. The method includes: A protocol stack in the first communication apparatus obtains to-be-transmitted first data. The first data may be complete data, that is, a segment of data having complete semantics. Alternatively, the first data may be a last part of complete data, and the complete data includes a plurality of parts of data.

Then, the protocol stack in the first communication apparatus generates at least one packet based on the first data, where the at least one packet is used to carry the first data. A quantity of packets in the at least one packet may be one or more. When the at least one packet is one packet, the packet carries the entire first data. When the at least one packet is a plurality of packets, each of the plurality of packets carries a part of the first data, so that the plurality of packets cooperatively carry the first data.

Finally, the protocol stack of the first communication apparatus sequentially sends the at least one packet. The at least one packet includes a first packet. The first packet is a last sent packet in the at least one packet. A packet header of the first packet includes a first flag. The first flag indicates that the first packet is the last packet in all packets used to carry the complete data. In other words, in a process in which the first communication apparatus generates a packet based on the last part of data (that is, the first data) in the complete data and sends the packet, the first communication apparatus may add the first flag to the last generated packet (the packet is also the last sent packet), to indicate that the packet is the last packet in all the packets that carry the complete data, so that a receive end determines a message boundary.

In this solution, the transmit end adds the flag to the packet header of the last packet in the at least one packet that carries the complete data, to indicate that the packet is the last packet in all the packets corresponding to the complete data, so that the receive end can determine the message boundary based on the flag in the packet header. The receive end only needs to check a specific position in a packet header of each received packet to determine whether the packet carries a flag. In other words, the message boundary can be determined without traversing data carried in the packet. Therefore, less processing resources of the receive end are consumed, thereby effectively improving data processing efficiency.

In a possible implementation, the method further includes: The protocol stack in the first communication apparatus obtains indication information, where the indication information is used to indicate that the first data is the last part of the complete data. The first data may be the complete data. In other words, there is no other part of data included in the complete data after the first data. Therefore, the indication information may indicate that the first data is the last part of the complete data. In addition, the complete data may alternatively include a plurality of parts of data, the first data is a part of the plurality of parts of data included in the complete data, and the first data is the last part of the plurality of parts of data. In conclusion, after the first communication apparatus completes sending of the first data, sending of the entire complete data is completed. In this way, after obtaining the first data, the protocol stack may add, based on an indication of the indication information, the first flag to the last packet (that is, the first packet) generated based on the first data, to indicate that the packet is the last packet in all the packets that carry the complete data.

In this solution, a status of data currently obtained by the communication apparatus is indicated by using the indication information, so that the communication apparatus can effectively identify whether the first flag needs to be added to a packet corresponding to the current data, thereby facilitating subsequent identification of the receive end for a message boundary.

In a possible implementation, the indication information comes from an application that generates the first data. In other words, when transferring the first data to the protocol stack, the application further transfers the indication information to the protocol stack.

In a possible implementation, the indication information is transferred by the application through an extended socket (socket) interface.

For example, the application may transfer the indication information and the first data to the protocol stack through the extended socket interface. For example, the extended socket interface may be an extended send() interface, and is configured to transfer to-be-transmitted data to the protocol stack and indicate whether the to-be-transmitted data is complete data. In addition to transferring data to the protocol stack, the extended send() interface further has a newly extended function, that is, indicates whether currently transmitted data is the last part of the complete data.

In a possible implementation, the first flag is located in a reserved field or an extended field in the packet header of the first packet. The first flag may be specifically represented by using a 1-bit field. The 1-bit field may be located in a reserved field or an extended field in a packet header of a packet 1. For example, when a value of a field used to represent the first flag is 1, it indicates that the packet includes the first flag; or when a value of a field used to represent the first flag is 0, it indicates that the packet does not include the first flag.

In a possible implementation, the at least one packet is sent according to a stream transmission protocol. For example, the at least one packet is sent based on TCP. To be specific, the first communication apparatus does not need to wait for all the packets in the at least one packet being generated before sending the packets, thereby effectively ensuring data transmission efficiency.

In a possible implementation, a quantity of packets in the at least one packet is related to a data amount of the first data. A larger data amount of the first data indicates a larger quantity of packets in the at least one packet. A smaller data amount of the first data indicates a smaller quantity of packets in the at least one packet.

A second aspect of this application provides a data transmission method, applied to a second communication apparatus serving as a receive end. The method includes: The second communication apparatus sequentially receives the at least one packet. The at least one packet includes a first packet. The first packet is a last received packet in the at least one packet. A packet header of the first packet includes a first flag. The first flag indicates that the first packet is the last packet in all packets used to carry complete data. The second communication apparatus parses the at least one packet, to obtain the first data carried in the at least one packet.

In this solution, in a process of receiving a packet, the communication apparatus serving as the receive end triggers parsing processing on all previously received packets only when receiving a packet having a first flag in a packet header. A message boundary can be determined by checking a specific position in a packet header of each packet, thereby effectively reducing consumption of processing resources.

In a possible implementation, before the second communication apparatus parses the at least one packet, the method further includes: A protocol stack in the second communication apparatus buffers each packet in the sequentially received at least one packet. After receiving the first packet, the protocol stack in the second communication apparatus returns the at least one packet to an application based on the first flag in the first packet, where the application is used to parse the at least one packet.

Specifically, network transmission hardware (for example, a network interface card) in the second communication apparatus transfers each received packet to the protocol stack in the second communication apparatus. When the protocol stack in the second communication apparatus sequentially receives the packets, the protocol stack checks a packet header of each packet, to determine whether the packet header of the packet has the first flag. If the protocol stack finds that the packet header of the packet does not have the first flag, it is considered that the packet is not the last packet in all the packets that carry the complete data, and therefore the packet is buffered. If the protocol stack finds that the packet header of the packet has the first flag, it is considered that the packet is the last packet in all the packets that carry the complete data, and therefore, the packet and previously buffered other packets may be considered as all the packets that carry the complete data.

In a possible implementation, the first flag is located in a reserved field or an extended field in the packet header of the first packet.

In a possible implementation, the at least one packet is sent according to a stream transmission protocol.

In a possible implementation, a quantity of packets in the at least one packet is related to a data amount of the first data.

A third aspect of this application provides a communication apparatus, including: an obtaining module, configured to obtain first data; a processing module, configured to generate at least one packet based on the first data, where the at least one packet is used to carry the first data; and a sending module, configured to sequentially send the at least one packet, where the at least one packet includes a first packet, the first packet is a last sent packet in the at least one packet, a packet header of the first packet includes a first flag, and the first flag indicates that the first packet is the last packet in all packets used to carry complete data.

In a possible implementation, the obtaining module is further configured to obtain indication information, where the indication information indicates that the first data is a last part of the complete data.

In a possible implementation, the indication information comes from an application that generates the first data.

In a possible implementation, the indication information is transferred by the application through an extended socket socket interface.

In a possible implementation, the first flag is located in a reserved field or an extended field in the packet header of the first packet.

In a possible implementation, the at least one packet is sent according to a stream transmission protocol.

In a possible implementation, a quantity of packets in the at least one packet is related to a data amount of the first data.

A fourth aspect of this application provides a communication apparatus, including: a receiving module, configured to sequentially receive at least one packet, where the at least one packet includes a first packet, the first packet is a last received packet in the at least one packet, a packet header of the first packet includes a first flag, and the first flag indicates that the first packet is the last packet in all packets used to carry complete data; and a processing module, configured to parse the at least one packet, to obtain first data carried in the at least one packet.

In a possible implementation, the processing module is further configured to: buffer each packet in the sequentially received at least one packet; and after the first packet is received, return the at least one packet to an application based on the first flag in the first packet, where the application is used to parse the at least one packet.

In a possible implementation, the first flag is located in a reserved field or an extended field in the packet header of the first packet.

In a possible implementation, the at least one packet is sent according to a stream transmission protocol.

In a possible implementation, a quantity of packets in the at least one packet is related to a data amount of the first data.

A fifth aspect of this application provides a communication apparatus. The communication apparatus includes a memory and a processor. The memory stores code. The processor is configured to execute the code. When the code is executed, the communication apparatus performs the method in any implementation of the first aspect or the second aspect.

A sixth aspect of this application provides a computer-readable storage medium. The computer-readable storage medium stores a computer program. When the computer program is run on a computer, the computer is enabled to perform the method in any implementation of the first aspect or the second aspect.

A seventh aspect of this application provides a computer program product. When the computer program product is run on a computer, the computer is enabled to perform the method in any implementation of the first aspect or the second aspect.

An eighth aspect of this application provides a chip, including one or more processors. A part or all of the processors are configured to read and execute a computer program stored in a memory, to perform the method in any implementation of the first aspect or the second aspect.

Optionally, the chip further includes a memory, and the memory and the processor are connected to a memory through a circuit or a wire. Optionally, the chip further includes a communication interface, and the processor is connected to the communication interface. The communication interface is configured to receive data and/or information that need/needs to be processed. The processor obtains the data and/or the information from the communication interface, processes the data and/or the information, and outputs a processing result by using the communication interface. The communication interface may be an input/output interface. The method provided in this application may be implemented by one chip, or may be cooperatively implemented by a plurality of chips.

For technical effects brought by any one of the design manners of the second aspect to the eighth aspect, refer to technical effects brought by different implementations of the first aspect. Details are not described herein again.

### BRIEF DESCRIPTION OF DRAWINGS

FIG. 1 is a diagram of a system architecture in a related technology;
FIG. 2 is a diagram of a TCP-based data transmission procedure in a related technology;
FIG. 3 is a diagram of a structure of a communication apparatus 101 according to an embodiment of this application;
FIG. 4 is a schematic flowchart of a data transmission method according to an embodiment of this application;
FIG. 5 is a diagram of a format of a packet according to an embodiment of this application;
FIG. 6 is another diagram of a format of a packet according to an embodiment of this application;
FIG. 7 is a diagram of an architecture to which a data transmission method is applied according to an embodiment of this application;
FIG. 8 is a diagram of a data sending procedure according to an embodiment of this application;
FIG. 9 is a diagram of a data receiving procedure according to an embodiment of this application;
FIG. 10 is a diagram of a structure of a communication apparatus according to an embodiment of this application;
FIG. 11 is a diagram of a structure of another communication apparatus according to an embodiment of this application;
FIG. 12 is a diagram of a structure of an execution device according to an embodiment of this application; and
FIG. 13 is a diagram of a structure of a computer-readable storage medium according to an embodiment of this application.

### DESCRIPTION OF EMBODIMENTS

The following clearly and completely describes the technical solutions in embodiments of this application with reference to the accompanying drawings in embodiments of this application. It is clear that the described embodiments are merely some but not all of embodiments of this application.

In the specification, claims, and accompanying drawings of this application, the terms "first", "second", "third", "fourth", and so on (if existent) are intended to distinguish between similar objects but do not necessarily indicate a specific order or sequence. It should be understood that data termed in such a way are interchangeable in proper circumstances so that embodiments described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

For ease of understanding, the following first describes some technical terms used in embodiments of this application.

### (1) Open system interconnection reference model (Open System Interconnection Reference Model, OSI model)

The OSI model is a conceptual model proposed by the international organization for standardization, and is actually a standard framework of a network that attempts to interconnect various computers in the world. The OSI divides a computer network architecture into seven layers: a physical layer, a data link layer, a network layer, a transport layer, a session layer, a presentation layer, and an application layer. Functions of the seven-layer structure are described as follows:

Physical layer: converts data into electronic signals that can be transmitted through a physical medium, and is equivalent to a porter in a post office.

Data link layer: determines a network medium access manner. Generally, at the data link layer, data is framed, and flow control is processed. The data link layer specifies a topology and provides hardware addressing, and is equivalent to a packing and unpacking worker in the post office.

Network layer: routes use right data through a large-scale network, and is equivalent to a sorting worker in the post office.

Transport layer: provides a reliable connection between terminals, and is equivalent to a messenger in the post office.

Session layer: allows users to use simple and easy-to-remember names to establish connections, and is equivalent to a secretary who receives and sends letters, and writes and opens envelopes in a company.

Presentation layer: negotiates a data exchange format, and is equivalent to an assistant who briefs a boss and writes letters for the boss in the company.

Application layer: is an interface between an application of a user and a network.

### (2) TCP

TCP is a connection-oriented, reliable, and byte stream-based transport layer communication protocol. Specifically, TCP is a transmission protocol designed to provide reliable end-to-end byte streams on unreliable networks.

### (3) User datagram protocol (User Datagram Protocol, UDP)

UDP is a connectionless transport layer protocol, in the OSI model, that provides a simple but unreliable transaction-oriented information transmission service. Like TCP, UDP is used to process data packets. In the OSI model, both UDP and TCP are located at the transport layer, that is, the upper layer of the network layer. UDP has disadvantages of not providing data packet grouping and assembly and being incapable of data packet sorting. In other words, after a packet is sent, it cannot be learned whether the packet arrives securely and completely. UDP is used to support network applications that need to transmit data between computers. Many network applications in a client/server mode, including a network videoconferencing system, need to use the UDP protocol. Currently, many applications support only UDP, such as multimedia data streams. No extra data is generated. Retransmission is not performed even if it is learned that there is a damaged packet. UDP is the best choice when transmission performance rather than transmission integrity is emphasized, for example, audio and multimedia applications. UDP is also a good choice when a data transmission time is short and a previous connection process becomes a main traffic part.

### (4) Stream control transmission protocol (Stream Control Transmission Protocol, SCTP)

SCT is a protocol for transmitting a plurality of data streams between two network connection ends.

### (5) Hypertext transfer protocol (HyperText Transfer Protocol, HTTP)

HTTP is a simple request-response protocol that usually runs above TCP. HTTP specifies a specific message that a client may send to a server and a specific obtained response.

### (6) Packet

The packet is a data unit exchanged and transmitted in a network, namely a data block to be sent by a station at a time. The packet includes to-be-sent complete data information. Lengths of packets are inconsistent. The length of the packet is not limited and variable.

Generally, the packet includes a packet header and a payload (payload). The packet header is some additional information segments encapsulated for data transmission. The payload is used to carry data that actually needs to be transmitted.

### (7) Packet header

The packet header is usually referred to as a header for short, and indicates some information segments encapsulated in a header of a packet, to indicate some information required in a packet transmission process.

### (8) Socket (socket)

The socket is abstraction of an endpoint for bidirectional communication between application processes on different hosts on a network. One socket is one end of process communication on the network, and provides a mechanism for a process at the application layer to exchange data by using a network protocol. In terms of a status of the socket, the socket is connected to an application process upstream and a network protocol stack downstream. The socket is an interface for communication between applications through the network protocol and an interface for interaction between an application and the network protocol stack.

### (9) Message

The message described in embodiments means a data unit for information exchange between processes or software components. The message is a segment of data with complete semantics, such as a complete HTTP request, a complete HTTP response, a complete video frame, or a complete remote procedure call (Remote Procedure Call, RPC) request. The message is different from the packet. The packet is a data unit exchanged and transmitted in a network, namely a data block to be sent by a station at a time. The packet is merely a transmission unit and has no requirement on semantics. The message is a data unit with complete semantics. A long message needs to be carried by a plurality of packets, and a short message may be shorter than a packet.

### (10) Message transmission

The message transmission means that when transmitting data, a transmit end first determines whether currently prepared data is a complete message. If the currently prepared data is not a complete message, the transmit end continues to wait for the data until all the data is ready, and then sends the data to a receive end.

### (11) Stream transmission

For the stream transmission, a concept of a stream is similar to that of a water flow with no boundary. The stream transmission means a byte stream with no boundary. For example, during data transmission, a transmit end first sends a segment of 100-byte data, and then sends a segment of 200-byte data. In a stream transmission process, the data is aggregated into a stream with no boundary, and boundaries of the 100-byte data and the 200-byte data do not exist. At a receive end, a data receiver can obtain data of any length from a stream transmission channel during one time of operation (if there is no data in the channel, the data receiver can wait). The data receiver cannot sense a data boundary. In the foregoing example, the receiver may receive 50 bytes in a first operation, and may attempt to receive 300 bytes in a subsequent operation. In this case, the stream transmission channel has only 250 bytes. In software implementation, the receiver may wait for the remaining 50 bytes, or may return the existing 250 bytes first.

### (12) Reliable transmission

The reliable transmission indicates to ensure reliability of data transmission by using a transmission protocol. Specifically, after sending data, a transmit end confirms that the data is correctly received by a receive end. Specific measures include: 1. After receiving the data, the receive end sends acknowledgment information to the transmit end, and the transmit end considers that the data is correctly received by the receive end when receiving the acknowledgment information. For example, A talks with B during a phone call. A says to B "Meeting this afternoon", and B confirms "Got it, meeting requested for this afternoon". After receiving the acknowledgment information, A considers that B has correctly received the information "Meeting this afternoon". If A has not received the acknowledgment from B, A repeatedly sends "Meeting this afternoon" to B. If A has not received the acknowledgment from B after a plurality of repetitions, it is considered that the call fails. An acknowledgment mechanism implies a data retransmission mechanism. In other words, if the transmit end has not received the acknowledgment information, the transmit end performs retransmission. 2. The transmit end and the receive end have a mechanism for controlling a data sending rate. If the transmit end sends data at an excessively high rate, the receive end or an intermediate network node (a switch, a router, or the like that forwards data) cannot keep up. As a result, a data loss occurs. The transmit end and/or the receive end need/needs to have a mechanism for sensing a data loss or an excessively large overload (including an excessively large overload of the transmit end and/or the receive end or the intermediate node), and reduce a sending rate when a data loss occurs or an overload is excessively large. For example, in the foregoing scenario of the phone call between A and B, if A speaks too fast, B may feed back "Please speak more slowly".

### (13) Unreliable transmission

The unreliable transmission means that it cannot ensure that a receive end can receive data when the data is sent. A general method is that a transmit end is only responsible for sending the data, and does not require the receive end to provide a feedback or control a sending rate. For example, that a television station sends a television signal is unreliable transmission. The television station tries to only send a signal, regardless of whether the receive end receives the signal.

### (14) Protocol stack (Protocol stack)

The protocol stack, also referred to as a network stack, is a specific software implementation of a computer network protocol suite. A protocol in the protocol suite is usually designed only for one purpose. This can make the design easier. Because each protocol module usually communicates with two other protocol modules above and below the protocol module, the protocol modules may be usually imagined as layers in the protocol stack. A lowest-level protocol always describes physical interaction with hardware. More features are added to each higher level. A user application processes only an uppermost-layer protocol.

### (15) Maximum transmission unit (Maximum Transmission Unit, MTU)

The MTU usually means a maximum length of a packet, and is usually expressed in bytes. The MTU is used to notify a peer end of a maximum size of a data unit that can be received, to indicate a size of a payload that can be received by a sender. Specifically, the Ethernet has a limit on a length of a packet, and an MTU is generally 1500 bytes. Most of packet lengths in different types of networks have upper limits. If a communication apparatus has a data packet to be transmitted and a length of the data packet is greater than the MTU, the communication apparatus needs to perform fragmentation (fragmentation), that is, divide the data packet into fragments. In this way, each fragment of data is not greater than the MTU.

Currently, when data transmission is performed over a network, there are two types of common semantics: message transmission and stream transmission. In terms of ensuring reliable data arrival, there are further reliable transmission and unreliable transmission. A result of classification of transmission types according to the two dimensions may be shown in Table 1.

**Table 1**

| | Message transmission | Stream transmission |
|---|---|---|
| Reliable transmission | Reliable message transmission (SCTP) | Reliable stream transmission (TCP) |
| Unreliable transmission | Unreliable message transmission (UDP) | Unreliable stream transmission (rarely used) |

Most applications on a current network use TCP for data transmission. A few applications (such as audio and video conferences) that do not have a high requirement on reliability but have a high requirement on real-time transmission use UDP for data transmission. SCTP is seldom used in practice.

Reasons why most applications use reliable stream transmission (TCP) are as follows: Data to be transmitted by the applications needs to be correct, namely, reliable transmission. In addition, stream transmission has the following advantages over message transmission: An efficient stream control algorithm is easier designed for stream transmission, and a high throughput is easier implemented for stream transmission. Message transmission usually has a limit on a size of a single message, while stream transmission does not have this limit and can implement continuous transmission of any size of data for a long time.

In practice, although most applications use reliable stream transmission, semantically, more transmitted data is a segment of message with specific semantics. For example, data transmitted in a TCP stream according to HTTP is an HTTP request or an HTTP response, and each HTTP request or each HTTP response is a message with complete semantics. The HTTP request or the HTTP response can be further divided into a header (Header) and a body (Body). There is a boundary between the header and the body. The header has complete semantics, and the body also has complete semantics.

In the TCP stream, how does HTTP distinguish a request boundary and a boundary between a header and a body? The answer is that HTTP distinguishes a boundary by using a special character and a length field in the protocol. HTTP considers that received data starts with a header, and considers following data as a body when finding a character string "\r\n\r\n". A length of the body is described by using a Content-Length field in the header. It may be understood that data needs to be traversed to search the data for a specific character string. In this case, search costs are very high. Therefore, costs of distinguishing the boundary between the header and the body and a boundary between requests by a receive-end device are very high.

In conclusion, currently, most applications use TCP for reliable stream transmission, which requires message semantics. To be specific, data is segmented into messages for interpretation and processing. Therefore, boundaries are usually set in the data. It is costly for an application to distinguish a message boundary in a data stream. For example, operations such as searching for a special character string and parsing a length field need to be performed.

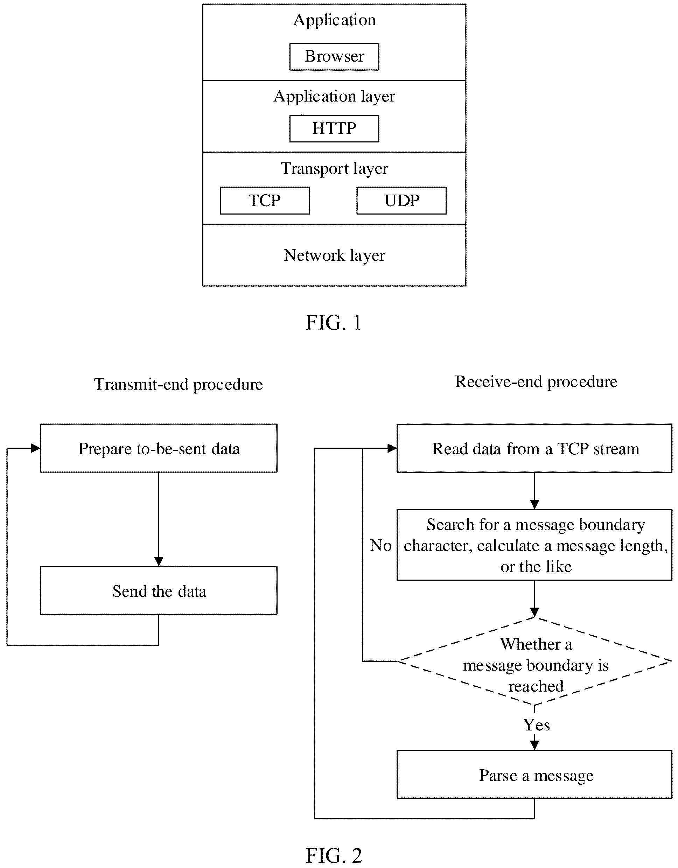

For example, refer to FIG. 1. FIG. 1 is a diagram of a system architecture in a related technology. As shown in FIG. 1, an application uses TCP at a transport layer for stream transmission, without distinguishing a message boundary. There is an application layer above TCP. The application layer distinguishes the message boundary by defining a special character or adding a length field.

Refer to FIG. 2. FIG. 2 is a diagram of a TCP-based data transmission procedure in a related technology. As shown in FIG. 2, when sending data, a transmit end sends data as long as a part of the to-be-sent data is prepared, and does not need wait for all the data of a complete message being prepared before sending the data. In other words, the transmit end can send a part of the data once the part of the data is prepared.

When a receive end receives the data, an application reads the data from a TCP data stream. Because TCP means stream transmission, the read part of data may not be a complete message and does not have complete semantics. Then, the application searches the data for a boundary character or calculates a message length, to determine whether a message boundary is reached. For example, if the data is transmitted according to the HTTP protocol, the application searches the data for an "\r\n\r\n" character string, to determine whether an end of an HTTP header is reached. If the application determines, by searching for the character string in the data, that the message boundary is not reached, the application continues to read data from the TCP stream. If the application determines, by searching for the character string in the data, that the message boundary is reached, the application parses the message. The application needs to traverse the data when searching the data for the character string. Therefore, a relatively large quantity of processing resources need to be consumed, and a performance cost of distinguishing a message boundary is relatively high.

It should be noted that, because data in the TCP data stream is all carried by using a packet, the application searches for a character string in data carried in a payload (payload) field of the packet.

In view of this, an embodiment of this application provides a data transmission method with a small modification made based on an existing stream transmission protocol. Specifically, the transmit end adds a flag to a packet header of a last packet in at least one packet that carries complete data, to indicate that the packet is the last packet in all packets corresponding to the complete data, so that the receive end can determine a message boundary based on the flag in the packet header. The receive end only needs to check a specific position in a packet header of each received packet to determine whether the packet carries a flag. In other words, the message boundary can be determined without traversing a large amount of data carried in the packet. Therefore, less processing resources of the receive end are consumed, thereby effectively improving data processing efficiency.

The data transmission method provided in this embodiment of this application may be applied to a communication apparatus. For example, the communication apparatus may be, for example, a server, a smartphone (mobile phone), a personal computer (personal computer, PC), a notebook computer, a tablet computer, a smart television, a mobile Internet device (mobile internet device, MID), a wearable device, a virtual reality (virtual reality, VR) device, an augmented reality (augmented reality, AR) device, a wireless communication apparatus in industrial control (industrial control), a wireless communication apparatus in self driving (self driving), a wireless communication apparatus in remote medical surgery (remote medical surgery), a wireless communication apparatus in a smart grid (smart grid), a wireless communication apparatus in transportation safety (transportation safety), a wireless communication apparatus in a smart city (smart city), or a wireless communication apparatus in a smart home (smart home).

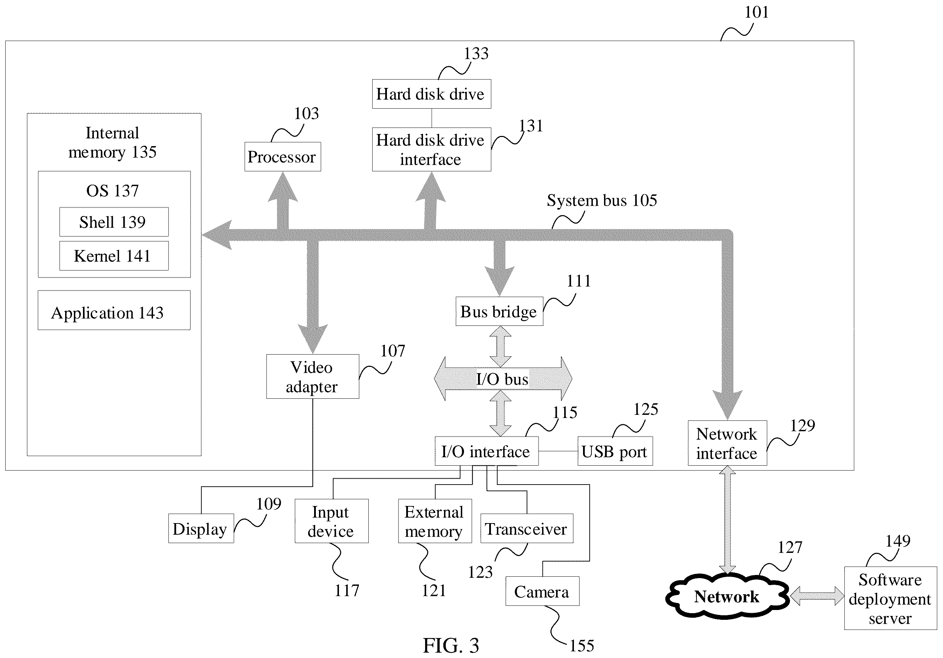

Refer to FIG. 3. FIG. 3 is a diagram of a structure of a communication apparatus 101 according to an embodiment of this application. As shown in FIG. 3, the communication apparatus 101 includes a processor 103, and the processor 103 is coupled to a system bus 105. The processor 103 may be one or more processors, and each processor may include one or more processor cores. A video adapter (video adapter) 107 may drive a display 109, and the display 109 is coupled to the system bus 105. The system bus 105 is coupled to an input/output (I/O) bus through a bus bridge 111. An I/O interface 115 is coupled to the I/O bus. The I/O interface 115 communicates with a plurality of I/O devices, such as an input device 117 (for example, a touchscreen), an external memory 121 (for example, a hard disk, a floppy disk, an optical disc, or a USB flash drive), a multimedia interface, a transceiver 123 (which may send and/or receive a radio communication signal), a camera 155 (which may capture static and dynamic digital video images), and an external USB port 125. Optionally, an interface connected to the I/O interface 115 may be a USB port.

The processor 103 may be any conventional processor, including a reduced instruction set computing (reduced instruction set Computing, RISC) processor, a complex instruction set computing (complex instruction set computing, CISC) processor, or a combination thereof. Optionally, the processor may be a dedicated apparatus, for example, an ASIC.

The communication apparatus 101 may communicate with a software deployment server 149 by using the network interface 129. For example, the network interface 129 is a hardware network interface, for example, a network interface card. A network 127 may be an external network such as the Internet, or an internal network such as the Ethernet or a virtual private network (virtual private network, VPN). Optionally, the network 127 may alternatively be a wireless network, for example, a Wi-Fi network or a cellular network.

A hard disk drive interface 131 is coupled to the system bus 105. The hardware drive interface is connected to a hard disk drive 133. An internal memory 135 is coupled to the system bus 105. Data running in the internal memory 135 may include an operating system (OS) 137, an application 143, and a schedule table of the communication apparatus 101.

The operating system includes a shell 139 and a kernel (kernel) 141. The shell 139 is an interface between a user and a kernel of the operating system. The shell is an outermost layer of the operating system. The shell manages interaction between the user and the operating system: waiting for an input from the user, interpreting input from the user to the operating system, and processing various output results of the operating system.

The kernel 141 includes parts that are in the operating system and that are used to manage a memory, a file, a peripheral, and a system resource. The kernel 141 directly interacts with hardware. The kernel of the operating system usually runs a process, provides inter-process communication, and provides functions such as CPU time slice management, interruption, memory management, and I/O management.

For example, when the communication apparatus 101 is a smartphone, the application 143 includes a program related to instant messaging. In an embodiment, when the application 143 needs to be executed, the communication apparatus 101 may download the application 143 from the software deployment server 149.

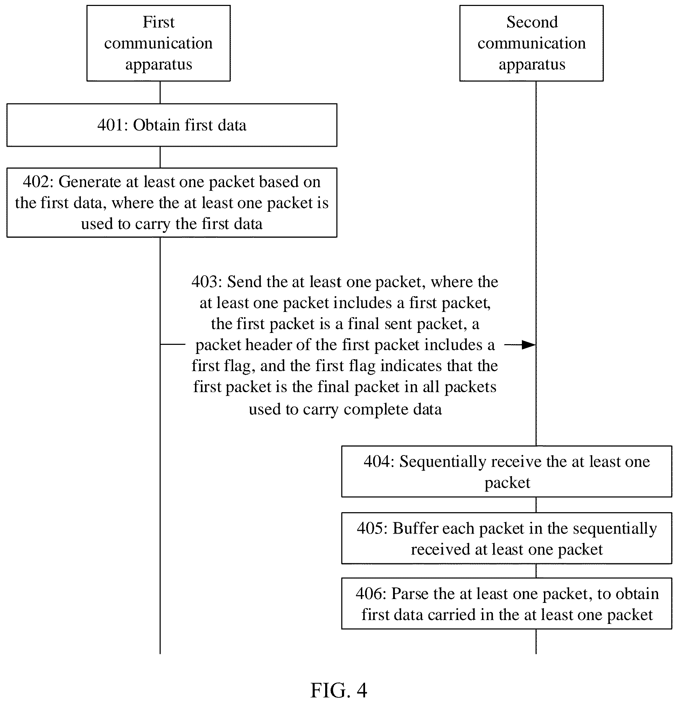

Refer to FIG. 4. FIG. 4 is a schematic flowchart of a data transmission method according to an embodiment of this application. As shown in FIG. 4, the data transmission method includes the following steps 401 to 406.

Step 401: A first communication apparatus obtains to-be-transmitted first data.

In this embodiment, the first communication apparatus is a transmit end, and is configured to transmit data to a second communication apparatus serving as a receive end.

The to-be-transmitted first data may be generated by an application on the first communication apparatus, for example, generated by an application such as a browser or a social software on the first communication apparatus. After the application generates the first data, the application may transfer the first data to software (for example, a protocol stack) responsible for sending data, so that the protocol stack can implement data transmission according to a corresponding transmission protocol. Therefore, after the application transfers the first data to the protocol stack, the first communication apparatus may obtain the to-be-transmitted first data.

Specifically, the first data may be complete data, that is, a segment of data with complete semantics, for example, a complete HTTP request, a complete HTTP response, a complete video frame, or a complete RPC request.

In addition, the first data may alternatively be a last part of complete data, and the complete data includes a plurality of parts of data. In other words, the first communication apparatus successively obtains the plurality of parts of data, and the first data is the last part of data included in the complete data.

Step 402: The first communication apparatus generates at least one packet based on the first data, where the at least one packet is used to carry the first data.

In this embodiment, the at least one packet may be one or more packets. In other words, the first communication apparatus may generate the one or more packets based on the first data.

A quantity of packets in the at least one packet generated by the first communication apparatus based on the first data is related to a data amount of the first data. It may be understood that, because a limit of a maximum length is imposed on a packet, when a length of the first data is greater than the maximum length of the packet (that is, when the data amount of the first data is excessively large), the first communication apparatus cannot carry the first data by using one packet, and needs to divide the first data into a plurality of data fragments. The plurality of data fragments are separately carried by using a plurality of packets.

Therefore, when the data amount of the first data is less than or equal to a maximum data amount that can be carried in one packet, the first communication apparatus generates one packet based on the first data; or when the data amount of the first data is greater than a maximum data amount that can be carried in one packet, the first communication apparatus generates a plurality of packets based on the first data.

When the first communication apparatus generates one packet based on the first data, a protocol stack in the first communication apparatus may encapsulate a packet header based on the first data according to a transmission protocol used for transmitting the first data, to obtain the packet carrying the first data.

When the first communication apparatus generates a plurality of packets based on the first data, a protocol stack in the first communication apparatus may divide the first data into the plurality of data fragments, and encapsulate a packet header based on each data fragment according to a transmission protocol, to obtain the plurality of packets. Each of the plurality of packets carries a part of the first data. Therefore, the plurality of packets can carry the first data.

Optionally, when the protocol stack in the first communication apparatus obtains the first data from the application, the protocol stack may further obtain indication information from the application, where the indication information indicates that the first data is the last part of the complete data. The first data may be the complete data. In other words, there is no other part of data included in the complete data after the first data. Therefore, the indication information may indicate that the first data is the last part of the complete data. In addition, the complete data may alternatively include a plurality of parts of data, the first data is a part of the plurality of parts of data included in the complete data, and the first data is the last part of the plurality of parts of data. In conclusion, after the first communication apparatus completes sending of the first data, sending of the entire complete data is completed.

In this way, after obtaining the first data, the protocol stack may add the first flag to the last packet (that is, the first packet) generated based on the first data, to indicate that the packet is the last packet in all the packets that carry the complete data.

For example, the application may transfer the indication information and the first data to the protocol stack through the extended socket interface. For example, the extended socket interface may be an extended send() interface, and is configured to transfer to-be-transmitted data to the protocol stack and indicate whether the to-be-transmitted data is complete data. In addition to transferring data to the protocol stack, the extended send() interface further has a newly extended function, that is, indicates whether currently transmitted data is the last part of the complete data.

In addition, if the application transfers the data to the protocol stack by calling the extended send() interface, the protocol stack obtains the foregoing indication information, and the protocol stack may consider that the currently obtained data is the complete data, and then add the first flag to the last packet generated based on the data. If the application transfers the data to the protocol stack by calling the extended send() interface, the protocol stack does not obtain the foregoing indication information, and the protocol stack may consider that the currently obtained data is not the complete data, and then add the first flag to none of the packets generated based on the data.

Step 403: The first communication apparatus sequentially sends the at least one packet to the second communication apparatus. The at least one packet includes a first packet. The first packet is a last sent packet in the at least one packet. A packet header of the first packet includes a first flag. The first flag indicates that the first packet is the last packet in all the packets used to carry the complete data.

In a process in which the first communication apparatus generates the at least one packet based on the first data, each time the first communication apparatus generates a packet, the first communication apparatus may send the generated packet to the second communication apparatus until all generated packets in the at least one packet are sequentially sent. In other words, the at least one packet generated by the first communication apparatus is sent according to a stream transmission protocol (for example, TCP). To be specific, the first communication apparatus does not need to wait for all the packets in the at least one packet being generated before sending the packets.

For example, when the first communication apparatus divides the first data into a data fragment 1, a data fragment 2, and a data fragment 3, and obtains a packet 1, a packet 2, and a packet 3 by respectively encapsulating the data fragment 1, the data fragment 2, and the data fragment 3, the first communication apparatus first obtains the packet 1 by encapsulating the data fragment 1. Then, the first communication apparatus may send the encapsulated packet 1 to the second communication apparatus. In addition, the first communication apparatus may further continue to obtain the packet 2 by encapsulating the data fragment 2. In other words, sending of the packet 1 and encapsulation of the packet 2 are performed simultaneously, and the first communication apparatus does not need to wait for encapsulation of the packet 1, the packet 2, and the packet 3 being completed before sending all the packets.

In a process in which the first communication apparatus performs packet encapsulation and sends a plurality of packets, the first communication apparatus sequentially performs packet encapsulation based on data fragments obtained by dividing the first data. Therefore, after sequentially obtaining the packets through encapsulation, the first communication apparatus also sequentially sends the encapsulated packets. In this way, when the first communication apparatus sends the last packet in the at least one packet to the second communication apparatus, it indicates that all the packets that carry the complete first data have been sent to the second communication apparatus. Therefore, when the first communication apparatus performs encapsulation for the last packet (that is, the first packet) in the at least one packet, the first communication apparatus may add the first flag to the first packet, to indicate that the first packet is the last packet in all the packets used to carry the complete data.

When the first communication apparatus generates only one packet based on the first data (that is, the foregoing at least one packet includes only one packet), the packet generated by the first communication apparatus carries the complete data, that is, the packet is the foregoing first packet. Therefore, the first packet includes the first flag.

In conclusion, in a process in which the first communication apparatus generates a packet based on the last part of data (that is, the first data) in the complete data and sends the packet, the first communication apparatus may add the first flag to the last generated packet (the packet is also the last sent packet), to indicate that the packet is the last packet in all the packets that carry the complete data, so that the receive end determines a message boundary.

The first flag may be understood as a message end flag that indicates that the packet carrying the first flag belongs to a last packet of a message. Therefore, receiving the packet carrying the first flag indicates that receiving of a complete message is completed. In other words, the complete data is received.

Optionally, the first flag is located in a reserved (reserved) field or an extended field in the packet header of the first packet. The first flag may be specifically represented by using a 1-bit field. The 1-bit field may be located in a reserved field or an extended field in a packet header of the packet 1. For example, when a value of a field used to represent the first flag is 1, it indicates that the packet includes the first flag; or when a value of a field used to represent the first flag is 0, it indicates that the packet does not include the first flag.

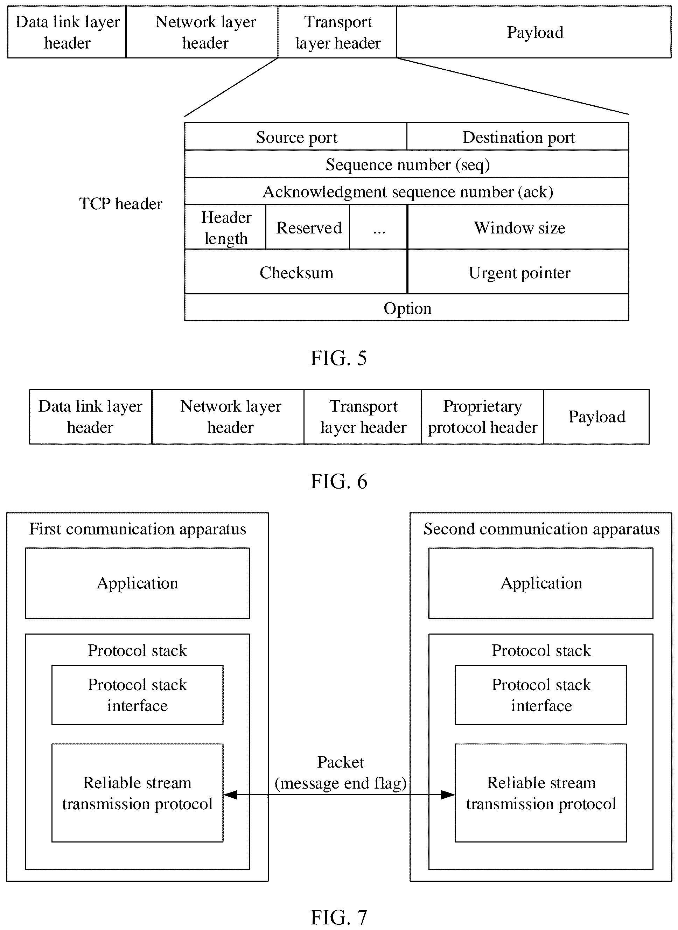

For example, refer to FIG. 5. FIG. 5 is a diagram of a format of a packet according to an embodiment of this application. As shown in FIG. 5, the packet usually includes a payload and a plurality of packet headers. The plurality of packet headers specifically include a transport layer header (corresponding to the TCP/UDP protocol), a network layer header (corresponding to the IP protocol), and a data link layer header. The plurality of packet headers may include a reserved field or an extended field. Therefore, the first flag may be set in a reserved field or an extended field of any packet header.

As shown in FIG. 5, the transport layer header may be, for example, a TCP header, and fields in the TCP header specifically include: a source port, a destination port, a sequence number, an acknowledgment sequence number, a header length, a reserved field, a window size, a checksum, an urgent pointer, and an option. The reserved field is a field reserved in advance, and has no substantive transmission meaning. Therefore, the first flag may be set in the reserved field in the TCP header. In addition, in addition to the fields in the transport layer header, the first flag may also be set in the data link layer header or the network layer header. This is not specifically limited in this embodiment.

In addition, further refer to FIG. 6. FIG. 6 is another diagram of a format of a packet according to an embodiment of this application. As shown in FIG. 6, in some cases, the packet may further have a proprietary protocol header, that is, a header obtained according to a transmission protocol released by a non-standard organization. In this case, the first flag may also be set in a reserved field or an extended field of the proprietary protocol header.

Step 404: The second communication apparatus sequentially receives the at least one packet.

Because the first communication apparatus sequentially sends, to the second communication apparatus, the at least one packet generated by the first communication apparatus, the second communication apparatus also sequentially receives the at least one packet from the first communication apparatus. The packet header of the last received first packet in the at least one packet includes the first flag. The first flag indicates that the first packet is the last packet in all the packets used to carry the complete data.

Step 405: The second communication apparatus buffers each packet in the sequentially received at least one packet.

In this embodiment, when the second communication apparatus sequentially receives the packets in the at least one packet, the second communication apparatus buffers the received packets, to parse and process, after determining a message boundary, one or more packets belonging to the same message.

Specifically, network transmission hardware (for example, a network interface card) in the second communication apparatus transfers each received packet to a protocol stack in the second communication apparatus. When the protocol stack in the second communication apparatus sequentially receives the packets, the protocol stack checks a packet header of each packet, to determine whether the packet header of the packet has the first flag. If the protocol stack finds that the packet header of the packet does not have the first flag, it is considered that the packet is not the last packet in all the packets that carry the complete data, and therefore the packet is buffered. If the protocol stack finds that the packet header of the packet has the first flag, it is considered that the packet is the last packet in all the packets that carry the complete data, and therefore, the packet and previously buffered other packets may be considered as all the packets that carry the complete data.

It may be understood that, when the first data is the complete data, the at least one packet generated based on the first data is all the packets that carry the complete data. When the first data is only a part of data in the complete data, the at least one packet generated based on the first data is only a part of all the packets that carry the complete data. The second communication apparatus may consider, as all the packets that carry the complete data, the first packet and other packets that are buffered before the first packet and that does not have the first flag.

Step 406: The second communication apparatus parses the at least one packet, to obtain the first data carried in the at least one packet.

After the second communication apparatus sequentially receives the at least one packet, the second communication apparatus may determine, based on the first flag in the last received first packet in the at least one packet, that the first packet is the last packet that carries the complete data. Therefore, the second communication apparatus may determine that the first packet and the other packets (for example, the at least one packet) buffered before the first packet are all the packets that carry the complete data. Therefore, the second communication apparatus may trigger, based on the first flag in the first packet, parsing processing on the at least one packet, to obtain the first data carried in the at least one packet.

It should be noted that when the first data is the complete data, the second communication apparatus may obtain the complete data by parsing the at least one packet. When the first data is only a part of data in the complete data, because the first data is the last sent part of data in the complete data, in addition to receiving the at least one packet used to carry the first data, the second communication apparatus further receives another packet that carries another part of the complete data. The second communication apparatus may obtain the complete data by parsing the at least one packet and the another packet that carries the another part of the complete data.

Specifically, after the protocol stack in the second communication apparatus receives the first packet, the protocol stack may determine, based on the first flag in the first packet, that the first packet is the last packet. Therefore, the protocol stack may return another buffered packet and the first packet (that is, the at least one packet) to the application, so that the application parses the at least one packet. The protocol stack may return at least one complete packet to the application, or the protocol stack may return, to the application after removing a packet header from the at least one packet, the first data carried in the at least one packet. This is not specifically limited in this embodiment.

The foregoing describes the data transmission method provided in embodiments of this application. The following describes in detail a specific execution procedure of the data transmission method with reference to a specific example.

For example, refer to FIG. 7. FIG. 7 is a diagram of an architecture to which a data transmission method is applied according to an embodiment of this application. As shown in FIG. 7, a first communication apparatus and a second communication apparatus have a same software architecture. To be specific, the first communication apparatus and the second communication apparatus include applications, protocol stacks, and protocol stack interfaces, and deployed reliable stream transmission protocols. The following describes the software architectures of the first communication apparatus and the second communication apparatus.

The first communication apparatus and the second communication apparatus are devices participating in data exchange, for example, may be terminal devices such as a smartphone, a personal computer, and a notebook computer, or may be network devices such as a switch and a router.

The application is a computer program that completes one or more specific tasks on the first communication apparatus and the second communication apparatus. The applications on the first communication apparatus and the second communication apparatus need to exchange data with each other. For example, the applications on the first communication apparatus and the second communication apparatus are both social software programs, and need to exchange data content input by the user by using the social software programs.

The protocol stack is a program used to receive and send a network packet in an operating system, for example, a protocol stack in a Linux kernel.

The protocol stack interface is an interface provided by a kernel protocol stack for an upper layer (for example, an application layer at which an application is located), that is, a standard socket interface. For example, common interfaces include a send() interface, a recv() interface, a socket() interface, a bind() interface, a listen() interface, an accept() interface, a connect() interface, and a close() interface. The send() interface is used to send data, and the recv() interface is used to receive data. In this embodiment, new parameter values are added to the send() interface and the recv() interface to support sending and receiving of message semantics.

The reliable stream transmission protocol is a transmission protocol provided in this embodiment. The reliable stream transmission protocol is not a completely redesigned new message transmission protocol, but is slightly modified based on a mature stream transmission protocol (for example, TCP) to support message semantics.

Packet: In this embodiment, a message end flag is newly added to the packet, to indicate that the packet belongs to a last packet of a message. Receiving the packet indicates that receiving of a complete message is completed.

The following describes in detail a protocol stack interface and a reliable stream transmission protocol that are extended and modified in this embodiment.

For the protocol stack interface, in this embodiment, the send() interface and the recv() interface are extended.

Currently, the send() interface is specifically ssize_t send(int sockfd, const void*buf, size_t len, int flags).

Herein, ssize_t send(int sockfd, const void*buf, size_t len, int flags) is a C language function named send, and defines four parameters of the function. Specifically, int sockfd, const void*buf, size_t len, and int flags respectively represent types of different parameters. Current existing values of a parameter int flags include MSG_CONFIRM, MSG_DONTROUTE, MSG_DONTWAIT, MSG_EOR, MSG_MORE, MSG_NOSIGNAL, and MSG_OOB.

In this embodiment, a new value: MSG_FINISHED is added to the parameter int flags, and the value indicates that a to-be-sent part of data is an end of a message, that is, a last part of complete data. In other words, MSG_FINISHED of the parameter int flags in the send() interface is equivalent to indication information described in the foregoing embodiment, and indicates that the part of data currently transferred by using the send() interface is the last part of the complete data.

Each value MSG_XXX of the parameter int flags is a bit (similar to 2 to the power of n, such as 1, 2, 4, or 8, indicating a specific bit in a 32-bit integer). Therefore, in actual extended application, MSG_FINISHED only needs to be defined as a value different from the value of the existing parameter int flags.

For example, it is assumed that a length of complete data is 4000 bytes, the application may send the complete data by calling the send() interface for four times. Specifically, a manner in which the application calls the send() interface for four times may be shown as follows:
send(fd, buf, 1000, 0); //Send 1000 bytes without setting a flag.
send(fd, buf, 1000, 0); //Further send 1000 bytes without setting a flag.
send(fd, buf, 1000, 0); //Further send 1000 bytes without setting a flag.
send(fd, buf, 1000, MSG_FINISHED); //Send last 1000 bytes and set a message end flag.

In other words, the application may transfer data to the protocol stack by calling the send() interface for a plurality of times. When the application calls the send() interface to transfer a specific part of data in the complete data to the protocol stack, and the part of data is not the last part of data, the application may not set the MSG_FINISHED value in the parameter int flags, to indicate that the protocol stack does not need to set a message end flag when sending a packet corresponding to the part of data. When the application calls the send() interface to transfer the last part of data in the complete data to the protocol stack, the application may set the MSG_FINISHED value in the parameter int flags, to indicate that the protocol stack needs to set a message end flag when sending a packet corresponding to the part of data.

In this way, the application does not need to prepare complete data before transferring the data to the protocol stack. Instead, the application can transfer a part of data to the protocol stack once the part of data is prepared, thereby ensuring timeliness of data transfer and avoiding data transmission congestion. In addition, when transferring the last part of data, the application sets the MSG_FINISHED value to indicate that currently transferred data is the last part of data, so that the protocol stack can set the message end flag when sending the packet corresponding to the part of data. Therefore, a receive-end communication apparatus can quickly and effectively determine a message boundary.

Currently, the recv() interface is specifically ssize_t recv(int sockfd, void*buf, size_t len, int flags).

The recv() interface and the foregoing send() interface are a pair. The send() interface is used to send data, and the recv() interface is used to receive data.

In this embodiment, a new value: MSG_FULL is added to a parameter int flags in the recv() interface, to indicate that returning is performed when a complete message is received.

Corresponding to the foregoing example of sending a message, calling the recv() interface for receiving a message may be specifically:
recv(fd, buf, 5000, MSG_FULL); //Receive complete data at a time.

Different from a conventional message receiving interface, the recv() interface in this embodiment provides abundant flexibility. When calling the recv() interface, the application may set the MSG_FULL parameter, to indicate that the protocol stack performs returning after receiving complete data. If the MSG_FULL parameter is set, the protocol stack returns complete data to the application only after receiving the data (that is, a last packet for carrying the complete data), where the returned data is complete data.

When the application calls the recv() interface, the MSG_FULL parameter may alternatively not be set. If the MSG_FULL parameter is not set, the recv() interface has the same performance as a recv() interface used for common stream transmission. In other words, the protocol stack returns data to the application as long as the data is received, regardless of whether the data is complete.

The following describes a difference between a reliable stream transmission protocol provided in this embodiment and a reliable stream transmission protocol in a related technology.

Difference 1: When a transmit-end application transmits data to a protocol stack through a send() interface and sets an MSG_FINISHED flag, the protocol stack sends the data and sets a message end flag for a last packet of the data.

For example, the application calls send(fd, buf, 3000, MSG_FINISHED). An MTU of a current network is 1000. In other words, one packet carries data with a maximum of 1000 bytes. In this case, calling send() triggers generation of three packets. To be specific, the protocol stack encapsulates the data into three packets, and sets a message end flag only in a last packet.

Difference 2: When a receive-end application calls a recv() interface to receive data and sets an MSG_FULL flag, a protocol stack returns data to the application only after receiving complete data. If the MSG_FULL flag is not set, the protocol stack returns data to the application once the data is received.

For example, if a transmit-end application calls send(fd, buf, 3000, MSG_FINISHED) to send a 3000-byte message, and the receive-end application calls recv(fd, buf, 3000, 0) and does not set the MSG_FULL flag, the protocol stack blocks a receive-end thread at the call of recv() when no data is received. If the protocol stack receives the 1^{st} 1000-byte packet, recv() returns, where returned content includes 1000-byte data but not complete data.

It is assumed that the transmit-end application calls send(fd, buf, 3000, MSG_FINISHED) to send a 3000-byte message. If the receive end calls recv(fd, buf, 3000, MSG_FULL), the protocol stack blocks a receive-end thread at the call of recv() when no data is received. When receiving the 1^{st} 1000-byte packet, the protocol stack checks the packet and finds no message end flag. In this case, the protocol stack buffers the packet and returns the complete 3000-byte data to the call of recv() until the 3^{rd} packet is received and a message receive flag is found.

The following describes, by using specific examples, detailed processes in which a communication apparatus serving as a transmit end sends data and a communication apparatus serving as a receive end receives data in embodiments of this application.

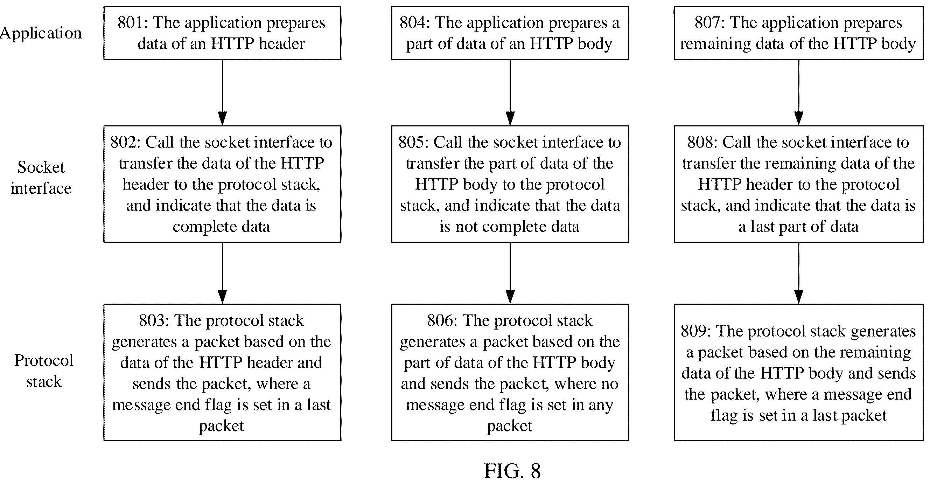

For example, refer to FIG. 8. FIG. 8 is a diagram of a data sending procedure according to an embodiment of this application. As shown in FIG. 8, when sending data to a second communication apparatus serving as a receive end, a first communication apparatus serving as a transmit end performs the following steps 801 to 809.

Step 801: An application on the first communication apparatus prepares data of an HTTP header, where the data of the HTTP header is complete data.

Specifically, when the application on the first communication apparatus needs to send an HTTP message to an application on the second communication apparatus, the application on the first communication apparatus usually first prepares the data of the HTTP header, to first send an HTTP header message to the application on the second communication apparatus.

Step 802: The application on the first communication apparatus calls a socket interface to transfer the data of the HTTP header to a protocol stack, and indicates that the data of the HTTP header is complete data.

After the data of the HTTP header is prepared, the application on the first communication apparatus may call a socket interface (for example, the foregoing send() interface) to transfer the data of the HTTP header to the protocol stack, and indicate that the data of the HTTP header is complete data.

For example, the send() interface function called by the application on the first communication apparatus may be specifically send(fd, buf, size, MSG_FINISHED). In other words, by using MSG_FINISHED, it is indicated that the currently transferred data of the HTTP header is complete data.

Step 803: The protocol stack of the first communication apparatus generates at least one packet based on the data of the HTTP header, and sends the at least one packet to the second communication apparatus, where a message end flag is set in a last packet in the at least one packet.

Specifically, a quantity of packets generated by the protocol stack based on the data of the HTTP header is related to a data amount of the data of the HTTP header. A larger data amount of the data of the HTTP header indicates a larger quantity of packets generated by the protocol stack. A smaller data amount of the data of the HTTP header indicates a smaller quantity of packets generated by the protocol stack.

In addition, when the application transfers the data of the HTTP header to the protocol stack, it is indicated that the data of the HTTP header is complete data. Therefore, the protocol stack adds the message end flag to the last packet in the generated at least one packet, to indicate that the packet is the last packet in all packets that carry the complete data.

Step 804: The application on the first communication apparatus continues to prepare a part of data of an HTTP body.

After the application completes preparation and transfers the data of the HTTP header to the protocol stack, the application continues to prepare the data of the HTTP body. In addition, because the data of the HTTP body is relatively complex, output data of a plurality of modules usually needs to be spliced. Therefore, the application currently first prepares the part of data of the HTTP body.

Step 805: The application on the first communication apparatus calls the socket interface to transfer the part of data of the HTTP body to the protocol stack, and indicates that the part of data of the HTTP body is not complete data.

After the application prepares the part of data of the HTTP body, the application may call the socket interface to transfer the part of data of the HTTP body to the protocol stack, and indicate, by using the socket interface, that the part of data of the HTTP body is not complete data.

For example, the send() interface function called by the application on the first communication apparatus may be specifically send(fd, buf, size, 0). In other words, by not setting the MSG_FINISHED flag, it is indicated that the currently transferred data of the HTTP body is not complete data.

Step 806: The protocol stack of the first communication apparatus generates at least one packet based on a part of data of the HTTP header, and sends the at least one packet to the second communication apparatus, where no message end flag is set in any packet in the at least one packet.

When the application transfers the part of data of the HTTP body to the protocol stack, it indicates that the part of data of the HTTP body is not complete data. Therefore, the protocol stack does not add the message end flag to any generated packet, to indicate that none of these packets is a last packet of all packets that carry complete data.

Step 807: The application on the first communication apparatus continues to prepare remaining data of the HTTP body.

Step 808: The application on the first communication apparatus calls the socket interface to transfer the remaining data of the HTTP body to the protocol stack, and indicates that the remaining data of the HTTP body is a last part of data in the complete data.

After the application prepares the remaining data of the HTTP body, the application may continue to call the socket interface to transfer the remaining data of the HTTP body to the protocol stack, and indicate, by using the socket interface, that the part of data of the HTTP body is the last part of data in the complete data.

For example, the send() interface function called by the application on the first communication apparatus may be specifically send(fd, buf, size, MSG_FINISHED). In other words, by using MSG_FINISHED, it is indicated that the currently transferred data of the HTTP body is complete data.

Step 809: The protocol stack of the first communication apparatus generates at least one packet based on remaining data of the HTTP header, and sends the at least one packet to the second communication apparatus, where a message end flag is set in a last packet in the at least one packet.

When the application transfers the remaining data of the HTTP body to the protocol stack, it is indicated that the remaining data of the HTTP body is the last part of data in the complete data. Therefore, the protocol stack adds the message end flag to the last packet in the generated at least one packet, to indicate that the packet is the last packet in all the packets that carry the complete data.

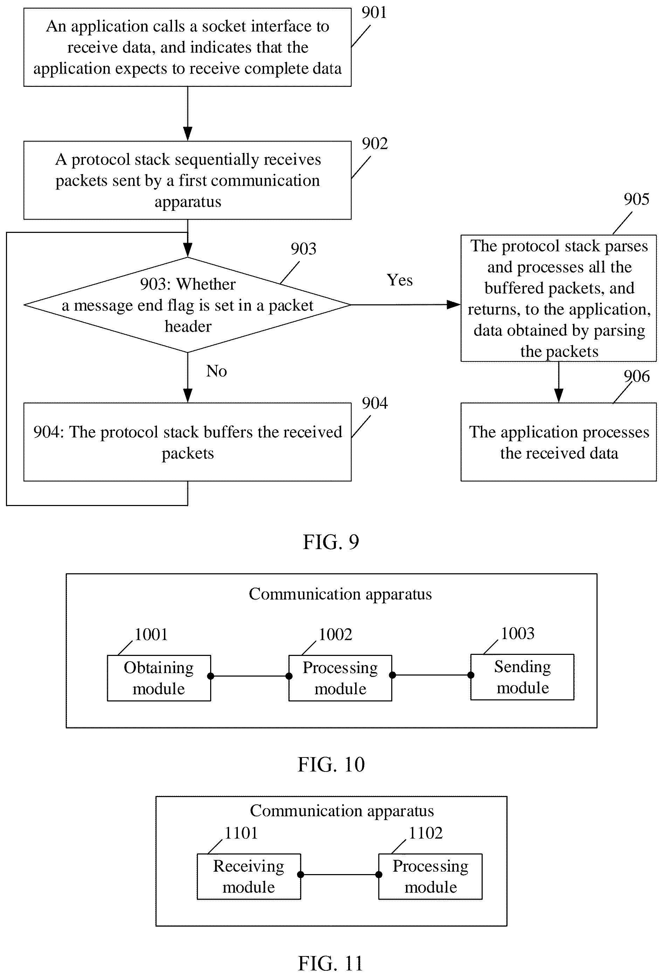

For example, refer to FIG. 9. FIG. 9 is a diagram of a data receiving procedure according to an embodiment of this application. As shown in FIG. 9, when receiving data sent by a first communication apparatus serving as a transmit end, a receive-end second communication apparatus performs the following steps 901 to 906.

Step 901: An application on the second communication apparatus calls a socket interface to receive data, and indicates that the application expects to receive complete data.

In this step, the application may call a recv() interface to receive data from a protocol stack, and the application may indicate, to the protocol stack by using a parameter value of the recv() interface, that the application expects to receive complete data.

For example, the recv() interface function called by the application may be specifically recv(fd, buf, len, MSG_FULL), and an MSG_FULL parameter value is used to indicate that complete data is expected to be received.

Step 902: The protocol stack sequentially receives packets sent by the first communication apparatus.

In a process in which the first communication apparatus sequentially sends packets to the second communication apparatus, the protocol stack of the second communication apparatus sequentially receives the packets sent by the first communication apparatus.

Step 903: The protocol stack checks whether a message end flag is set in a packet header of the received packet.

Step 904: If the message end flag is not set in the packet header of the packet received by the protocol stack, the protocol stack buffers the received packet, and continues to receive a subsequent packet.

If the message end flag is not set in the packet header of the packet received by the protocol stack, it indicates that the packet received by the protocol stack is not a last packet in all packets that carry complete data. Therefore, the protocol stack buffers the received packet, and continues to receive the subsequent packet.

Step 905: If the message end flag is set in the packet header of the packet received by the protocol stack, the protocol stack parses and processes all buffered packets, and returns, to the application, data obtained by parsing the packets.

If the message end flag is set in the packet header of the packet received by the protocol stack, it indicates that the protocol stack has received the last packet in all the packets that carry the complete data. Therefore, the protocol stack may parse and process all the buffered packets (that is, all the packets that carry the complete data), and return, to the application, the data obtained by parsing the packets.

Step 906: The application processes the received data.

The foregoing embodiments describe the data transmission method provided in embodiments of this application. The following describes a device for performing the foregoing data transmission method.

Refer to FIG. 10. FIG. 10 is a diagram of a structure of a communication apparatus according to an embodiment of this application. As shown in FIG. 10, the communication apparatus includes: an obtaining module 1001, configured to obtain first data; a processing module 1002, configured to generate at least one packet based on the first data, where the at least one packet is used to carry the first data; and a sending module 1003, configured to sequentially send the at least one packet, where the at least one packet includes a first packet, the first packet is a last sent packet in the at least one packet, a packet header of the first packet includes a first flag, and the first flag indicates that the first packet is the last packet in all packets used to carry complete data.

In a possible implementation, the obtaining module 1001 is further configured to obtain indication information, where the indication information indicates that the first data is a last part of the complete data.

In a possible implementation, the indication information comes from an application that generates the first data.

In a possible implementation, the indication information is transferred by the application through an extended socket socket interface.

In a possible implementation, the first flag is located in a reserved field or an extended field in the packet header of the first packet.

In a possible implementation, the at least one packet is sent according to a stream transmission protocol.

In a possible implementation, a quantity of packets in the at least one packet is related to a data amount of the first data.

Refer to FIG. 11. FIG. 11 is another diagram of a structure of a communication apparatus according to an embodiment of this application. As shown in FIG. 11, the communication apparatus includes: a receiving module 1101, configured to sequentially receive at least one packet, where the at least one packet includes a first packet, the first packet is a last received packet in the at least one packet, a packet header of the first packet includes a first flag, and the first flag indicates that the first packet is the last packet in all packets used to carry complete data; and a processing module 1102, configured to parse the at least one packet, to obtain first data carried in the at least one packet.

In a possible implementation, the processing module 1102 is further configured to: buffer each packet in the sequentially received at least one packet; and after the first packet is received, return the at least one packet to an application based on the first flag in the first packet, where the application is used to parse the at least one packet.

In a possible implementation, the first flag is located in a reserved field or an extended field in the packet header of the first packet.

In a possible implementation, the at least one packet is sent according to a stream transmission protocol.

In a possible implementation, a quantity of packets in the at least one packet is related to a data amount of the first data.

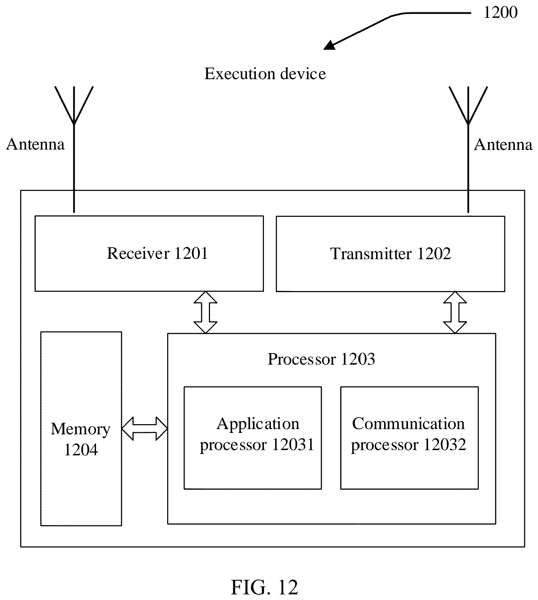

The following describes an execution device provided in embodiments of this application. Refer to FIG. 12. FIG. 12 is a diagram of a structure of an execution device according to an embodiment of this application. The execution device 1200 may be specifically a mobile phone, a tablet computer, a notebook computer, a smart wearable device, a server, or the like. This is not limited herein. Specifically, the execution device 1200 includes a receiver 1201, a transmitter 1202, a processor 1203, and a memory 1204 (there may be one or more processors 1203 in the execution device 1200, and one processor is used as an example in FIG. 12). The processor 1203 may include an application processor 12031 and a communication processor 12032. In some embodiments of this application, the receiver 1201, the transmitter 1202, the processor 1203, and the memory 1204 may be connected through a bus or in another manner.

The memory 1204 may include a read-only memory and a random access memory, and provide instructions and data to the processor 1203. Apart of the memory 1204 may further include a non-volatile random access memory (non-volatile random access memory, NVRAM). The memory 1204 stores a processor and operation instructions, an executable module, or a data structure; or a subset thereof; or an extended set thereof. The operation instructions may include various operation instructions used to implement various operations.

The processor 1203 controls an operation of the execution device. In specific application, the components of the execution device are coupled together through a bus system. In addition to a data bus, the bus system may further include a power bus, a control bus, a status signal bus, and the like. However, for clear description, various types of buses in the figure are marked as the bus system.

The method disclosed in embodiments of this application may be applied to the processor 1203, or may be implemented by the processor 1203. The processor 1203 may be an integrated circuit chip with a signal processing capability. In an implementation process, the steps of the foregoing methods can be implemented by using a hardware integrated logical circuit in the processor 1203, or by using instructions in a form of software. The processor 1203 may be a general-purpose processor, a digital signal processor (digital signal processor, DSP), a microprocessor, or a microcontroller. The processor 1203 may further include an application-specific integrated circuit (application-specific integrated circuit, ASIC), a field-programmable gate array (field-programmable gate array, FPGA) or another programmable logic device, a discrete gate or a transistor logic device, or a discrete hardware component. The processor 1203 may implement or perform the methods, the steps, and the logical block diagrams disclosed in embodiments of this application. The general-purpose processor may be a microprocessor, or the processor may be any conventional processor or the like. The steps of the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory 1204, and the processor 1203 reads information in the memory 1204 and completes the steps of the foregoing methods in combination with hardware of the processor.

The receiver 1201 may be configured to receive input digit or character information, and generate a signal input related to a related setting and function control of the execution device. The transmitter 1202 may be configured to output digital or character information through a first interface. The transmitter 1202 may be further configured to send instructions to a disk group through the first interface, to modify data in the disk group. The transmitter 1202 may further include a display device such as a display.

In this embodiment of this application, in a case, the processor 1203 is configured to perform the method in the embodiment corresponding to FIG. 4.

The electronic device provided in embodiments of this application may be specifically a chip. The chip includes a processing unit and a communication unit. The processing unit may be, for example, a processor, and the communication unit may be, for example, an input/output interface, a pin, or a circuit. The processing unit may execute computer-executable instructions stored in a storage unit, to enable a chip in the execution device to perform the rendering method described in the foregoing embodiments. Optionally, the storage unit is a storage unit in the chip, for example, a register or a buffer. Alternatively, the storage unit may be a storage unit in a wireless access device but outside the chip, for example, a read-only memory (read-only memory, ROM), another type of static storage device that can store static information and instructions, or a random access memory (random access memory, RAM).

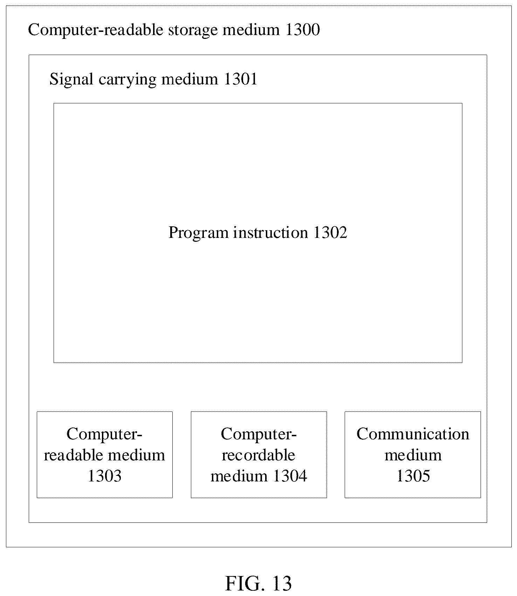

Refer to FIG. 13. FIG. 13 is a diagram of a structure of a computer-readable storage medium according to an embodiment of this application. This application further provides a computer-readable storage medium. In some embodiments, the method disclosed in FIG. 4 may be implemented as computer program instructions encoded in a machine-readable format on the computer-readable storage medium or encoded in another non-transitory medium or product.

FIG. 13 schematically shows a conceptual partial view of an example computer-readable storage medium arranged according to at least some embodiments shown herein, and the example computer-readable storage medium includes a computer program for executing a computer process on a computing device.

In an embodiment, the computer-readable storage medium 1300 is provided by using a signal carrying medium 1301. The signal carrying medium 1301 may include one or more program instructions 1302 that may provide the foregoing functions or some functions described in FIG. 4 when being run by one or more processors. In addition, the program instructions 1302 in FIG. 13 are also described as example instructions.

In some examples, the signal carrying medium 1301 may include a computer-readable medium 1303, for example, but not limited to, a hard disk drive, a compact disc (CD), a digital video disc (DVD), a digital tape, a memory, a ROM, or a RAM.

In some implementations, the signal carrying medium 1301 may include a computer-recordable medium 1304, for example, but not limited to, a memory, a read/write (R/W) CD, or an R/W DVD. In some implementations, the signal carrying medium 1301 may include a communication medium 1305, for example, but not limited to, a digital and/or analog communication medium (for example, an optical fiber, a waveguide, a wired communication link, or a wireless communication link). Therefore, for example, the signal carrying medium 1301 may be conveyed by the communication medium 1305 in a wireless form (for example, a wireless communication medium that complies with the IEEE 802 standard or another transmission protocol).

The one or more program instructions 1302 may be, for example, computer-executable instructions or logic implementation instructions. In some examples, the computing device may be configured to provide various operations, functions, or actions in response to the program instruction 1302 transmitted to the computing device by using one or more of the computer-readable medium 1303, the computer-recordable medium 1304, and/or the communication medium 1305.

All or a part of the foregoing embodiments may be implemented by using software, hardware, firmware, or any combination thereof. When software is used to implement the embodiments, all or a part of the embodiments may be implemented in a form of a computer program product.

The computer program product includes one or more computer instructions. When the computer program instructions are loaded and executed on a computer, the procedures or functions according to embodiments of the present invention are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk Solid State Disk (SSD)), or the like.

It may be clearly understood by persons skilled in the art that, for the purpose of convenient and brief description, for a detailed working process of the foregoing system, apparatus, and unit, reference may be made to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. A part or all of the units may be selected according to actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or a part of the technical solutions may be implemented in the form of a software product. The computer software product is stored in a storage medium and includes several instructions for instructing a computer device (which may be a personal computer, a server, or a network device) to perform all or a part of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing embodiments are merely intended for describing the technical solutions of this application other than limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application.

## Claims

1. A data transmission method, comprising:
obtaining first data;
generating at least one packet based on the first data, wherein the at least one packet is used to carry the first data; and
sequentially sending the at least one packet, wherein the at least one packet comprises a first packet, the first packet is a last sent packet in the at least one packet, a packet header of the first packet comprises a first flag, and the first flag indicates that the first packet is the last packet in all packets used to carry complete data.

2. The method according to claim 1, wherein the method further comprises:
obtaining indication information, wherein the indication information indicates that the first data is a last part of the complete data.

3. The method according to claim 2, wherein the indication information comes from an application that generates the first data.

4. The method according to claim 3, wherein the indication information is transferred by the application through an extended socket socket interface.

5. The method according to any one of claims 1 to 4, wherein the first flag is located in a reserved field or an extended field in the packet header of the first packet.

6. The method according to any one of claims 1 to 5, wherein the at least one packet is sent according to a stream transmission protocol.

7. The method according to any one of claims 1 to 6, wherein a quantity of packets in the at least one packet is related to a data amount of the first data.

8. A data transmission method, comprising:
sequentially receiving at least one packet, wherein the at least one packet comprises a first packet, the first packet is a last received packet in the at least one packet, a packet header of the first packet comprises a first flag, and the first flag indicates that the first packet is the last packet in all packets used to carry complete data; and
parsing the at least one packet, to obtain first data carried in the at least one packet.

9. The method according to claim 8, wherein before the parsing the at least one packet, the method further comprises:
buffering each packet in the sequentially received at least one packet; and
after the first packet is received, returning the at least one packet to an application based on the first flag in the first packet, wherein the application is used to parse the at least one packet.

10. The method according to claim 8 or 9, wherein the first flag is located in a reserved field or an extended field in the packet header of the first packet.

11. The method according to any one of claims 8 to 10, wherein the at least one packet is sent according to a stream transmission protocol.

12. The method according to any one of claims 8 to 11, wherein a quantity of packets in the at least one packet is related to a data amount of the first data.

13. A communication apparatus, comprising:
an obtaining module, configured to obtain first data;
a processing module, configured to generate at least one packet based on the first data, wherein the at least one packet is used to carry the first data; and
a sending module, configured to sequentially send the at least one packet, wherein the at least one packet comprises a first packet, the first packet is a last sent packet in the at least one packet, a packet header of the first packet comprises a first flag, and the first flag indicates that the first packet is the last packet in all packets used to carry complete data.

14. The apparatus according to claim 13, wherein
the obtaining module is further configured to obtain indication information, wherein the indication information indicates that the first data is a last part of the complete data.

15. The apparatus according to claim 14, wherein the indication information comes from an application that generates the first data.

16. The apparatus according to claim 14, wherein the indication information is transferred by the application through an extended socket socket interface.

17. The apparatus according to any one of claims 13 to 16, wherein the first flag is located in a reserved field or an extended field in the packet header of the first packet.

18. A communication apparatus, comprising:
a receiving module, configured to sequentially receive at least one packet, wherein the at least one packet comprises a first packet, the first packet is a last received packet in the at least one packet, a packet header of the first packet comprises a first flag, and the first flag indicates that the first packet is the last packet in all packets used to carry complete data; and
a processing module, configured to parse the at least one packet, to obtain first data carried in the at least one packet.

19. The apparatus according to claim 18, wherein the processing module is further configured to:
buffer each packet in the sequentially received at least one packet; and
after the first packet is received, return the at least one packet to an application based on the first flag in the first packet, wherein the application is used to parse the at least one packet.

20. The apparatus according to claim 18 or 19, wherein the first flag is located in a reserved field or an extended field in the packet header of the first packet.

21. A communication apparatus, comprising a memory and a processor, wherein the memory stores code, the processor is configured to execute the code, and when the code is executed, the apparatus performs the method according to any one of claims 1 to 12.

22. A computer storage medium, wherein the computer storage medium stores instructions; and when the instructions are executed by a computer, the computer is enabled to implement the method according to any one of claims 1 to 12.

23. A computer program product, wherein the computer program product stores instructions; and when the instructions are executed by a computer, the computer is enabled to implement the method according to any one of claims 1 to 12.
